(19) **Europäisches Patentamt European Patent Office Office européen des brevets**

(11) **EP 1 454 147 B1**

(12) **FASCICULE DE BREVET EUROPEEN**

(45) Date de publication et mention de la délivrance du brevet:
**29.08.2007 Bulletin 2007/35**

(21) Numéro de dépôt: **02805385.8**

(22) Date de dépôt: **13.12.2002**

(51) Int Cl.:
**G01P 5/165** (2006.01)     **G01P 13/02** (2006.01)

(86) Numéro de dépôt international:
**PCT/FR2002/004347**

(87) Numéro de publication internationale:
**WO 2003/054557 (03.07.2003 Gazette 2003/27)**

(54) **SONDE MULTIFONCTION A FLECHE VARIABLE**

MULTIFUNKTIONALE SONDE MIT VARIABLEM PFEILUNGSWINKEL

MULTIPURPOSE PROBE WITH VARIABLE SWEEP

(84) Etats contractants désignés:
**DE FR GB**

(30) Priorité: **14.12.2001 FR 0116160**

(43) Date de publication de la demande:
**08.09.2004 Bulletin 2004/37**

(73) Titulaire: **Thales**
**92200 Neuilly Sur Seine (FR)**

(72) Inventeurs:
• **Collot, Lionel**
**Thales Intellectual Property**
**F-94117 Arcueil Cedex (FR)**

• **Hanson, Nicolas**
**Thales Intellectual Property**
**F-94117 Arcueil Cedex (FR)**

(74) Mandataire: **Collet, Alain**
**Marks & Clerk France**
**31-33 Avenue Aristide Briand**
**94117 Arcueil Cedex (FR)**

(56) Documents cités:
**WO-A-01/67115          WO-A-99/61923**
**FR-A- 2 802 647**

## Description

L'invention se rapporte à une sonde multifonction pour aéronef. Le pilotage de tout aéronef nécessite de connaître sa vitesse relative par rapport à l'air, c'est-à-dire au vent relatif. Cette vitesse est déterminée à l'aide de capteurs de la pression statique Ps, de la pression totale Pt, et de l'angle d'incidence $\alpha$. $\alpha$ fournit la direction du vecteur de vitesse dans un système de référence, ou référentiel, lié à l'aéronef et (Pt - Ps) fournit le module de ce vecteur vitesse. Les trois paramètres aérodynamiques permettent donc de déterminer le vecteur vitesse d'un avion et, accessoirement, d'un aéronef à rotor basculant dit convertible.

Les différents capteurs de mesure de pression statique, de pression totale et d'incidence peuvent être regroupés dans une sonde dite multifonction. Cette sonde peut être mobile comme celle décrite dans le brevet français FR 2 665 539. Elle comporte alors une palette mobile autour d'un axe perpendiculaire à la peau de l'aéronef sur lequel la sonde est montée. La palette mobile s'oriente naturellement dans l'axe de l'écoulement d'air entourant l'aéronef et la position angulaire de la palette autour de l'axe de rotation donne l'angle d'incidence locale $\alpha_{loc}$ de la sonde. Par ailleurs, le capteur de pression totale Pt est par exemple réalisé au moyen d'un tube, dit tube de Pitot, solidaire de la palette et s'ouvrant, à l'une des extrémités du tube, face à l'écoulement. L'autre extrémité du tube est sensiblement fermée. Un capteur de pression mesure la pression de l'air au fond du tube au voisinage de son extrémité fermée. Pour que la pression mesurée par ce capteur représente au mieux la pression totale Pt de l'écoulement d'air entourant l'aéronef, il est important que le tube de Pitot soit à l'extérieur d'une couche limite qui se développe dans l'écoulement d'air au voisinage immédiat de la peau de l'aéronef. A l'intérieur de la couche limite, plus on se rapproche de la peau de l'aéronef, plus une valeur mesurée de pression totale, qu'on y ferait, se rapprocherait de la valeur de la pression statique et moins il est possible de déterminer avec précision le module du vecteur vitesse de l'aéronef. L'épaisseur de la couche limite dépend de la forme de la peau de l'aéronef et surtout de la distance entre le nez de l'aéronef et la sonde. Par exemple, aux endroits habituels où on place une sonde multifonction, l'épaisseur de la couche limite est de l'ordre de 7 à 8 cm sur un avion gros porteur. Une position optimum du tube de Pitot est donc en saillie de l'ordre de 10 cm par rapport à la peau de l'aéronef.

Par ailleurs, la sonde multifonction comporte, disposées sur les faces latérales de la palette mobile, des prises de pression permettant de mesurer la pression statique de l'écoulement d'air entourant l'aéronef. Contrairement au tube de Pitot, les prises de pression permettant de mesurer la pression statique, dites prises de pression statique, peuvent se trouver à l'intérieur de la couche limite. Néanmoins, la pression mesurée par ces prises de pression, notée Ps est différente de la pression statique locale notée Ps loc qui régnerait, au niveau de la peau de l'aéronef, à l'endroit où la sonde est fixée, en l'absence de la sonde, c'est-à-dire sans perturbation. Néanmoins, la pression statique locale Ps loc peut être calculée à partir d'un coefficient de pression Kp de la sonde. Plus précisément, Kp est fonction de la forme de la palette et de la position des prises de pression sur la palette. Le coefficient Kp peut être défini de la façon suivante :

$$Kp = \frac{Ps - Psloc}{Ptloc - Psloc}$$

où Ptloc représente la pression totale mesurée au niveau des prises de pression statique.

Pour calculer la pression statique locale Psloc, il est donc nécessaire de connaître le coefficient de pression Kp de la sonde, ainsi que la pression totale locale Ptloc. Le coefficient de pression Kp est déterminé par étalonnage en soufflerie. Au cours de cet étalonnage, la couche limite développée le long de la veine de la soufflerie est suffisamment peu épaisse pour que les prises de pression statique soient en dehors de la couche limite. Dans ce cas, la pression totale Ptloc régnant au niveau des prises de statique est la même que la pression Pt mesurée par le tube de Pitot.

Par contre, si les prises de pression statique se trouvent dans la couche limite, la pression totale Ptloc, au niveau des prises de statique, n'est pas égale à celle observée au niveau du tube de Pitot, et les étalonnages effectués en soufflerie ne sont plus utilisables.

Pour pallier ce problème, une solution est de rendre le coefficient de pression Kp nul. Ainsi, la pression mesurée donne directement la pression statique locale Psloc indépendamment de la valeur de la pression totale Ptloc au niveau des prises de pression statique.

Un moyen efficace de réduire le coefficient de pression Kp à une valeur proche de zéro est d'augmenter la flèche de la palette. On définit la flèche $\lambda$ de la palette comme l'angle, que fait le bord d'attaque de la palette avec une direction perpendiculaire à la peau de l'aéronef, autrement dit avec l'axe de rotation de la palette. En effet, en supposant l'écoulement incompressible et le fluide, formant l'écoulement, parfait le coefficient de pression Kp peut s'exprimer par l'équation suivante :

$$Kp = 1 - \left(\frac{V}{V\infty}\right)^2$$

où V représente la vitesse de l'écoulement au niveau des prises de pression et où V∞ représente la vitesse de l'écoulement en amont de la sonde. L'équation précédente définit le coefficient de la pression Kp pour une flèche nulle. Lorsque le bord d'attaque de la palette est incliné d'une flèche $\lambda$, le coefficient Kp s'exprime de la façon suivante :

$$Kp = 1 - \frac{V^2 + (V\infty x \quad tg\lambda)^2}{\left(\dfrac{V\infty}{\cos\lambda}\right)^2}$$

d'où

$$Kp = \left[1 - \left(\frac{V}{V\infty}\right)^2\right] \quad x \quad (\cos\lambda)^2$$

On en déduit que plus la flèche $\lambda$ est importante, plus le coefficient de pression Kp est proche de zéro. Autrement dit, plus le bord d'attaque de la palette est incliné par rapport à son axe de rotation, moins la palette perturbe l'écoulement.

Néanmoins, en considérant l'autre contrainte précédemment énoncée, à savoir une saillie suffisante de la palette pour supporter le tube de Pitot hors de la couche limite, on risquerait d'obtenir une palette dont la longueur du bord d'attaque serait très importante. Il en résulterait une palette d'un encombrement important.

Le document WO 0167115 A divulgue une sonde multifonction pour aéronef, comportant une palette mobile destinée à s'orienter dans l'axe d'un écoulement d'air entourant la sonde, ladite palette mobile comprenant des moyens pour mesurer la pression totale (Pt) de l'écoulement et des moyens pour mesurer la pression statique (Ps) de l'écoulement; ladite palette mobile comportant un profil dont la flèche du bord d'attaque en amont et au voisinage des prises de pression statique est variable. Le document WO 9961923 A divulgue une sonde multifonction pour aéronef comportant une palette statique possédant un profil dont la flèche a une première valeur constante sur une première partie et une seconde valeur constante sur une seconde partie et dont la flèche a une rupture en amont et au voisinage des prises de pression statique.

L'invention a pour but de proposer une sonde dont la saillie est suffisante, dont le coefficient de pression Kp des prises de pression statique est voisin de zéro et dont l'encombrement est réduit.

Pour atteindre ce but, l'invention a pour objet une sonde multifonction pour aéronef, comportant une palette mobile destinée à s'orienter dans l'axe d'un écoulement d'air entourant la sonde, la palette mobile comprenant des premiers moyens de prise de pression pour mesurer la pression totale de l'écoulement, des seconds moyens de prise de pression pour mesurer la pression statique de l'écoulement, caractérisée en ce que la palette mobile comporte un profil dont la flèche est variable.

Les sondes multifonction montées sur aéronef sont amenées à fonctionner dans des conditions climatiques extrêmes et pour éviter la formation de givre sur les parois extérieures de la sonde ou même à l'intérieur d'orifices tels que le tube de Pitot ou les prises de pression statique, la sonde comporte des moyens pour la réchauffer, moyens formés par exemple d'une résistance chauffante disposée à l'intérieur de la sonde. On comprend que, plus l'encombrement de la sonde est important, plus la puissance électrique susceptible d'être dissipée dans la résistance chauffante devra être grande. En réduisant l'encombrement de la sonde, on réduit également la puissance de réchauffage à mettre en oeuvre pour dégivrer la sonde.

Un autre avantage lié à la réduction d'encombrement, d'une sonde conforme à l'invention, est la réduction de l'inertie de la palette dans son mouvement de rotation pour s'aligner avec l'axe de l'écoulement d'air l'entourant. Cette moindre inertie permet une meilleure sensibilité dans la mesure d'incidence locale que donne la position angulaire de la palette. De plus, lorsque pour améliorer la mesure d'incidence, on asservit le mouvement de rotation de la palette autour de son axe en fonction de mesure de pression d'incidence réalisée au voisinage du bord d'attaque de la palette, réduire l'inertie de la palette permet de réduire la puissance nécessaire à la motorisation de l'asservissement de la sonde. Pour plus de détails concernant l'asservissement du mouvement de rotation de la palette, on peut se reporter au brevet français publié sous le n° FR 2 665 539.

L'invention sera mieux comprise et d'autres avantages apparaîtront à la lecture de la description détaillée d'un mode de réalisation de l'invention, description illustrée par le dessin joint dans lequel :

- la figure 1 représente une sonde multifonction dont la flèche est importante au voisinage du tube de Pitot ;
- la figure 2 représente une sonde multifonction dont la flèche est importante au voisinage de la peau de l'aéronef sur laquelle elle est montée.

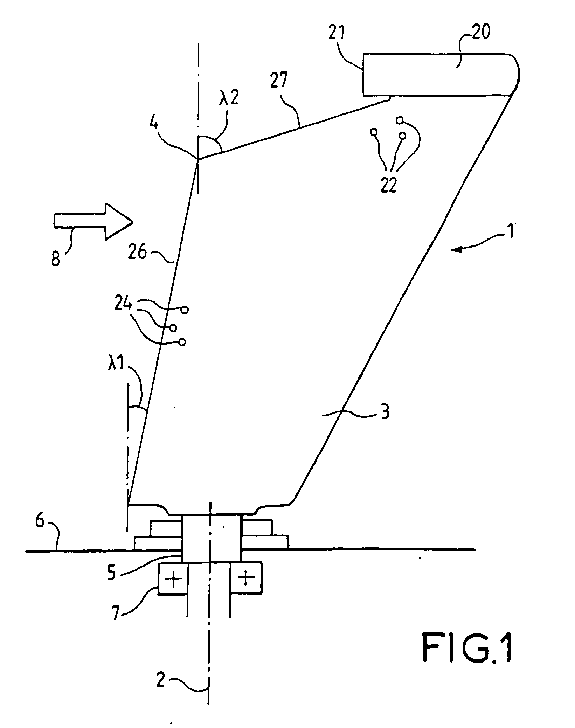

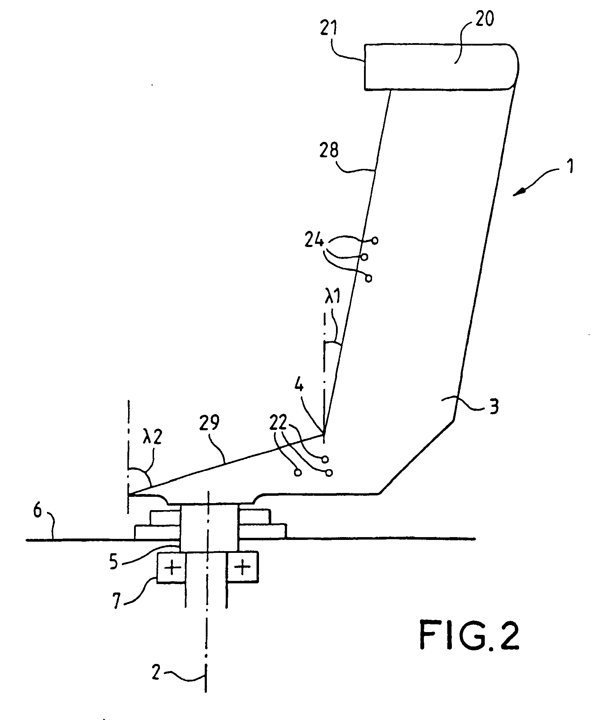

Les sondes représentées figures 1 et 2 comportent une palette mobile 1 en rotation autour d'un axe 2. La palette 1 comporte une aile 3 possédant un plan de symétrie, parallèle au plan de la figure et séparant l'intrados de l'extrados. Le profil de l'aile 3 perpendiculairement à son bord d'attaque 4 est par exemple du type OOZT du N.A.C.A. Il est bien entendu que d'autres formes d'ailes peuvent être utilisées pour mettre en oeuvre l'invention. La palette 1 comporte également un arbre 5 d'axe 2 qui pénètre à l'intérieur de la peau 6 d'un aéronef. L'arbre 5 est mobile en rotation par rapport à l'aéronef par exemple au moyen d'un palier 7 à roulement.

Du fait la forme de l'aile 3, la palette 1 s'oriente naturellement dans l'axe de l'écoulement d'air entourant la palette mobile 1. L'axe de l'écoulement est matérialisé par la flèche 8 représenté sur la figure 1.

Les sondes comportent en outre des moyens pour mesurer la pression totale Pt et la pression statique Ps de l'écoulement d'air ainsi que l'incidence i de l'aéronef.

Les moyens pour mesurer la pression totale comportent par exemple une prise de pression totale Pt comprenant un canal 20 s'ouvrant par un orifice 21 faisant sensiblement face à l'écoulement d'air d'axe 8. Le canal 20 est mieux connu sous le nom de tube de Pitot.

Les moyens pour mesurer la pression statique Ps comportent par exemple deux prises de pression statique 22 et 23, située chacune sur une des faces de la palette mobile 1. Sur la figure 1 seule la prise de pression 22 est visible. La prise de pression 23 est placée sur la face invisible de la palette mobile 1, de façon sensiblement symétrique à la prise de pression 22 par rapport au plan de symétrie de l'aile 3. Ce plan de symétrie est parallèle au plan de la figure 1. Chaque prise de pression 22 et 23 peut comporter plusieurs orifices, trois sont représentés sur la figure 1, afin notamment de limiter la section de chaque orifice pour moins perturber l'écoulement d'air entourant la palette mobile 1 ou encore pour être en mesure de réaliser la mesure de pression même si l'un des orifices venait à être obstrué. Les deux prises de pression statiques 22 et 23 sont en communication avec une chambre située à l'intérieur de la palette afin de moyenner la pression entre les deux prises 22 et 23.

Les moyens pour mesurer l'incidence $\alpha$ de l'aéronef comportent par exemple deux prises de pression d'incidence 24 et 25 situées, comme pour les prises de pression statique 22 et 23, sur une des faces de la palette également de façon sensiblement symétrique par rapport au plan de symétrie de l'aile 3. Les prises de pression d'incidence 24 et 25 ne sont pas en communication et c'est la différence entre les pressions régnant au niveau de chaque prise 24 et 25 qui permet de déterminer l'incidence exacte de la palette mobile 1 et par conséquent celle de l'aéronef. Afin d'améliorer la sensibilité de la mesure d'incidence, on peut placer les prises de pression 24 et 25 au voisinage immédiat du bord d'attaque 4 de la palette mobile 1.

L'utilisation des informations issues des différentes prises de pression totale, statique et d'incidence est par exemple décrite dans le brevet français FR 2 665 539. Ce brevet décrit notamment l'asservissement de la position angulaire de la palette mobile 1 autour de son axe 2 afin que l'aile 3 de la palette mobile 1 soit alignée au mieux dans l'axe 8 de l'écoulement d'air.

Dans les deux modes de réalisation de l'invention représentés sur les figures 1 et 2, le profil de la palette mobile a une flèche variable. On définit la flèche de la palette mobile comme l'angle que fait le bord d'attaque de la palette mobile par rapport à l'axe 2 de rotation de la palette mobile. Plus précisément, la flèche a une première valeur sur une première partie du profil et une seconde valeur sur une seconde partie du profil. En d'autres termes, le bord d'attaque de la palette forme une ligne brisée. Dans la première partie du profil, c'est-à-dire au voisinage des prises de pression d'incidence, la valeur $\lambda 1$ de la flèche est inférieure à la valeur $\lambda 2$ de la flèche dans la seconde partie du profil située au voisinage des prises de pression statique 22 et 23. Plus précisément, en amont des prises de pression d'incidence, la flèche a une valeur constante $\lambda 2$ et en amont des prises de pression statique, la flèche a une valeur constante $\lambda 1$. On entend par amont des prises de pression d'incidence ou statique la partie du profil de la palette mobile susceptible d'influencer aérodynamiquement les prises de pression d'incidence, ou respectivement statique, lorsque la palette mobile est soumise à un écoulement d'air dont la direction est sensiblement perpendiculaire à l'axe 2.

Dans un premier mode de réalisation de l'invention, mode représenté sur la figure 1, la première partie 26 du profil est plus près de la peau 6 de l'aéronef que la seconde partie 27 du profil. Cette variante permet d'éloigner au maximum les prises de pression statiques 22 et 23 de la peau 6 de l'aéronef. Ainsi la pression totale locale Ptloc au niveau des prises de pression statiques 22 et 23 est la plus proche possible de la pression totale Pt mesurée par le tube de Pitot 20. Cette disposition présente un intérêt car le coefficient de pression Kp des prises de pression statiques 22 et 23 dépend aussi de la vitesse de l'aéronef. Dans la pratique, la flèche $\lambda 2$ permet de réduire l'amplitude de l'évolution du coefficient de pression Kp en fonction de la vitesse de l'aéronef. Ainsi, si Ptloc est égal ou sensiblement égal à Pt, la mesure de pression Ps réalisé au niveau des prises de pression statiques 22 et 23 permet de calculer facilement la pression statique locale Psloc à l'endroit où la sonde est positionnée sur la peau 6 de l'aéronef.

Avantageusement, la valeur $\lambda 2$ de flèche est définie de façon à ce qu'une valeur Kp du coefficient de pression des prises de pression statiques soit sensiblement nulle pour une plage de vitesse donnée de l'écoulement d'air, la plage contenant notamment la vitesse de croisière de l'aéronef.

Dans un second mode de réalisation de l'invention, mode représenté sur la figure 2, la première partie 28 du profil est plus éloignée de la peau 6 de l'aéronef que la seconde partie 29 du profil. Cette variante permet de réduire encore l'inertie de la palette.

## Revendications

1. Sonde multifonction pour aéronef, comportant une palette mobile (1) destinée à s'orienter dans l'axe (8) d'un écoulement d'air entourant la sonde, la palette mobile (1) comprenant des premiers moyens (20, 21) de prise de pression pour mesurer la pression totale (Pt) de l'écoulement, des seconds moyens (22, 23) de prise de pression pour mesurer la pression statique (Ps) de l'écoulement, **caractérisée en ce que** la palette mobile (1) comporte un profil dont la flèche ($\lambda 1$, $\lambda 2$) est variable, **en ce que** la flèche a une première valeur ($\lambda 1$) sur une première partie (26, 28) du profil de la palette (1), **en ce que** la flèche a une seconde valeur ($\lambda$2) constante sur une seconde partie (27, 29) du profil de la palette en amont et au voisinage des seconds moyens (22, 23) de prise de pression (Ps) et **en ce que** la première valeur ($\lambda$1) est inférieure à la seconde valeur ($\lambda$2).

2. Sonde multifonction selon la revendication précédente, **caractérisée en ce qu'**elle comporte des troisièmes moyens (24, 25) de prise de pression destinés à mesurer l'incidence ($\alpha$) de la palette mobile (1) par rapport à l'écoulement d'air, et **en ce qu'**en amont des troisièmes moyens (24, 25) de prise de pression ($\alpha$), la flèche a une valeur constante ($\lambda$1).

3. Sonde multifonction selon l'une des revendications précédentes, **caractérisée en ce qu'**elle est disposée sur la peau (6) de l'aéronef, **en ce que** les premiers moyens (20, 21) de prise de pression (Pt) sont situés hors d'une couche limite développée dans l'écoulement au voisinage de la peau (6) de l'aéronef.

4. Sonde multifonction selon l'une des revendications précédentes, **caractérisée en ce qu'**elle est disposée sur la peau (6) de l'aéronef, et **en ce que** la première partie (26) du profil est plus près de la peau (6) de l'aéronef que la seconde partie (27) du profil.

5. Sonde multifonction selon l'une des revendications précédentes, **caractérisée en ce que** la seconde valeur ($\lambda$2) de flèche est définie de façon à ce qu'une valeur (Kp) du coefficient de pression des seconds moyens (22, 23) de prise de pression (Ps) soit sensiblement nulle pour une vitesse donnée de l'écoulement d'air.

## Claims

1. Multifunction probe for aircraft, having a mobile vane (1) intended to align with the axis (8) of an air flow around the probe, the mobile vane (1) comprising first pressure tap means (20, 21) for measuring the total pressure (Pt) of the flow, second pressure tap means (22, 23) for measuring the static pressure (Ps) of the flow, **characterized in that** the mobile vane (1) has a profile whose flexure ($\lambda$1, $\lambda$2) is variable, **in that** the flexure has a first value ($\lambda$1) over a first part (26, 28) of the profile of the vane (1), **in that** the flexure has a second value ($\lambda$2) over a second part (27, 29) of the profile of the vane upstream of and in the vicinity of the second tap means (22, 23) for pressure (Ps), and **in that** the first value ($\lambda$1) is less than the second value ($\lambda$2).

2. Multifunction probe according to the preceding claim, **characterized in that** it includes third pressure tap means (24, 25), which are intended to measure the incidence ($\alpha$) of the mobile vane (1) with respect to the air flow, and **in that** the flexure has a constant value ($\lambda$1) upstream of the third tap means (24, 25) for pressure ($\alpha$).

3. Multifunction probe according to either of the preceding claims, **characterized in that** it is arranged on the skin (6) of the aircraft, **in that** the first tap means (20, 21) for pressure (Pt) are located outside a boundary layer developed in the flow in the vicinity of the skin (6) of the aircraft.

4. Multifunction probe according to one of the preceding claims, **characterized in that** it is arranged on the skin (6) of the aircraft, and **in that** the first part (26) of the profile is closer to the skin (6) of the aircraft than the second part (27) of the profile.

5. Multifunction probe according to one of the preceding claims, **characterized in that** the second flexure value ($\lambda$2) is defined so that a value (Kp) of the pressure coefficient of the second tap means (22, 23) for pressure (Ps) is substantially zero for a given velocity of the air flow.

## Patentansprüche

1. Multifunktionssonde für ein Luftfahrzeug, die eine bewegliche Fahne (1) aufweist, die dazu bestimmt ist, sich in der Achse (8) einer die Sonde umgebenden Luftströmung auszurichten, wobei die bewegliche Fahne (1) erste Druckabgriffmittel (20, 21), um den Gesamtdruck (Pt) der Strömung zu messen, und zweite Druckabgriffmittel (22, 23) aufweist, um den statischen Druck (Ps) der Strömung zu messen, **dadurch gekennzeichnet, dass** die bewegliche Fahne (1) ein Profil aufweist, dessen Pfeilungswinkel $\lambda$1, $\lambda$2) variabel ist, dass der Pfeilungswinkel einen ersten Wert ($\lambda$1) in einem ersten Bereich (26, 28) des Profils der Fahne (1) hat, dass der Pfeilungswinkel einen zweiten konstanten Wert ($\lambda$2) in einem zweiten Bereich (27, 29) des Profils der Fahne vor und in der Nähe der zweiten Abgriffmittel (22, 23) des Drucks (Ps) hat, und dass der erste Wert ($\lambda$1) unter dem zweiten Wert ($\lambda$2) liegt.

2. Multifunktionssonde nach dem vorhergehenden Anspruch, **dadurch gekennzeichnet, dass** sie dritte Druckabgriffmittel (24, 25) aufweist, die dazu bestimmt sind, den Einfallwinkel ($\alpha$) der beweglichen Fahne (1) bezüglich der Luftströmung zu messen, und dass vor den dritten Abgriffmitteln (24, 25) des Drucks ($\alpha$) der Pfeilungswinkel einen konstanten Wert ($\lambda$1) hat.

3. Multifunktionssonde nach einem der vorhergehenden Ansprüche, **dadurch gekennzeichnet, dass** sie auf der Haut (6) des Luftfahrzeugs angeordnet ist, dass die ersten Abgriffmittel (20, 21) des Drucks (Pt) sich außerhalb einer Grenzschicht befinden, die sich in der Strömung in der Nähe der Haut (6) des Luftfahrzeugs entwickelt.

4. Multifunktionssonde nach einem der vorhergehenden Ansprüche, **dadurch gekennzeichnet, dass** sie auf der Haut (6) des Luftfahrzeugs angeordnet ist, und dass der erste Bereich (26) des Profils näher an der Haut (6) des Luftfahrzeugs ist als der zweite Bereich (27) des Profils.

5. Multifunktionssonde nach einem der vorhergehenden Ansprüche, **dadurch gekennzeichnet, dass** der zweite Wert ($\lambda 2$) des Pfeilungswinkels so definiert wird, dass ein Wert (Kp) des Druckkoeffizienten der zweiten Abgriffmittel (22, 23) des Drucks (Ps) bei einer gegebenen Geschwindigkeit der Luftströmung im Wesentlichen Null ist.

FIG.1

FIG.2

**EP 1 454 147 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- FR 2665539
- WO 0167115 A
- WO 9961923 A